# EUROPÄISCHE PATENTSCHRIFT

(11) **EP 1 588 382 B1**
(45) Veröffentlichungstag und Bekanntmachung des Hinweises auf die Patenterteilung: **14.02.2007**
(21) Anmeldenummer: 03785886.7
(22) Anmeldetag: 18.12.2003
(51) Int. Cl.: G12B 21/06, G12B 21/02, B81B 3/00, B81B 1/00

(54) **SONDE FÜR EIN OPTISCHES NAHFELDMIKROSKOP MIT VERBESSERTER STREULICHTUNTERDRÜCKUNG UND VERFAHREN ZU DEREN HERSTELLUNG**
PROBE FOR AN OPTICAL NEAR FIELD MICROSCOPE WITH IMPROVED SCATTERED LIGHT SUPPRESSION AND METHOD FOR PRODUCING THE SAME
SONDE POUR UN MICROSCOPE OPTIQUE A CHAMP PROCHE A ATTENUATION AMELIOREE DE LA LUMIERE DIFFUSEE ET PROCEDE DE PRODUCTION DE LADITE SONDE

(30) Priorität: 31.01.2003 DE 10303927
(43) Veröffentlichungstag der Anmeldung: 26.10.2005
(73) Patentinhaber: Fraunhofer-Gesellschaft zur Förderung der angewandten Forschung e.V., 80686 München (DE)
(72) Erfinder: BRANDENBURG, Albrecht, 79232 March (DE)
(74) Vertreter: Grünecker, Kinkeldey, Stockmair & Schwanhäusser Anwaltssozietät
(86) Internationale Anmeldenummer: PCT/EP2003/014557
(87) Internationale Veröffentlichungsnummer: WO 2004/068502

(56) Entgegenhaltungen:
- EP-A- 0 860 726
- DE-A- 19 509 903
- DE-A- 19 713 746
- DE-C- 4 314 301
- US-A- 5 354 985
- PATENT ABSTRACTS OF JAPAN Bd. 2000, Nr. 01, 31. Januar 2000 (2000-01-31) -& JP 11 281657 A (SEIKO INSTRUMENTS INC; AGENCY OF IND SCIENCE & TECHNOL), 15. Oktober 1999 (1999-10-15)

## Beschreibung

Die vorliegende Erfindung betrifft eine Sonde gemäß Anspruch 1 für ein optisches Nahfeldmikroskop, welche einen planaren Träger mit einer Sondenspitze aufweist, wobei die Sondenspitze zumindest teilweise aus einem transparenten Material besteht und als eine Vollstruktur ausgebildet ist, und der Träger einen Lichtwellenleiter mit einem Lichteinkopplungsbereich und/oder einem Lichtauskopplungsbereich aufweist. Die Erfindung betrifft weiter ein Verfahren zum Herstellen einer solchen Sonde gemäß Anspruch 18.

Optische Nahfeldmikroskope nutzen den Effekt, dass mit Hilfe einer Sonde mit einer sehr kleinen Blende in einem sehr geringen Abstand zu einer Probenoberfläche eine hohe optische Auflösung realisiert werden kann. Um dies zu erreichen, werden beispielsweise Sonden aus optischen Fasern hergestellt, welche durch ein Ziehen bei hohen Temperaturen an einem Ende spitz zulaufen. Das Faserende wird metallisch beschichtet, so dass an dem spitzen Ende der optischen Faser eine kleine Blende entsteht, durch die Licht aus der Faser austreten kann. Während des Mikroskopierens wird die Spitze in einen sehr geringen Abstand zu einer Probenoberfläche gebracht, wobei die Oberfläche durch die kleine Blende der Fasersonde beleuchtet wird und die Fasersonde in einem sehr geringen Abstand zur Probenoberfläche über diese gescannt wird.

Dabei ist die Ortsauflösung des von der Probe aufgenommenen Bildes wesentlich von dem Spitzenradius der Faser, der Größe der Blende und der Genauigkeit der Nachführung der Faser in vertikaler Richtung bei dem Scannen über die Probe abhängig.

Mittels Piezo-Antrieben oder eines Scherkraftmechanismus ist es bereits möglich, ein sehr genaues Nachführen der Fasersonde in vertikaler Richtung während des Scannens zu erzielen. Jedoch können die optischen Fasersonden bisher nur mit einer Blendengröße von etwa 100 Nanometern hergestellt werden, was zwar die optische Auflösung eines optischen Nahfeldmikroskops gegenüber-einem konventionellen Lichtmikroskop verbessert, aber nicht um Größenordnungen erhöht.

Zudem sind die Abmessungen der gezogenen Fasern nicht im erwünschten Maße reproduzierbar, so dass nach einem Wechsel der Faserspitze die Bilder des optischen Nahfeldmikroskops hinsichtlich Auflösung und Kontrast variieren können. Des weiteren ist mit dem Faserziehverfahren nur jeweils eine einzelne Spitze herstellbar, wodurch die Sonden nur mit geringer Produktivität und damit hohen Kosten gefertigt werden können.

Die DE 199 26 601 A1 beschreibt eine gattungsgemäße Sonde und ein zugehöriges Verfahren, bei dem die Sonde eine inwendig hohle, trichterförmige Sondenspitze aufweist, die sich durch die Dicke eines Biegebalkens hindurch erstreckt. Dabei sind die inneren Seitenkanten der hohlen Trichterstruktur mit einer Oxidschicht bedeckt. Für die Herstellung dieser Sonde werden in getrennten Verfahrensabläufen eine Struktur mit einer trichterförmigen Grube und ein Halteelement gefertigt. Diese beiden Strukturen werden nachfolgend miteinander verbunden, um dann die Sondenspitze aus dem Verbund durch Ätzen herauszubilden.

Diese Technologie ist aufgrund der Vielzahl von Prozessschritten aufwendig und teuer. Zudem können sich durch den Fügeschritt der Einzelstrukturen Ungenauigkeiten in den Sondenabmessungen ergeben. Es ist mit dieser Struktur nicht möglich, Licht mittels der Sonde direkt der Sondenspitze zuzuführen. Es ist lediglich möglich, einen Lichtstrahl oberhalb der Trichteröffnung zu positionieren, so dass Licht durch den Spitzenbereich der Sondenspitze auf die Probe treffen kann.

Die US 6,333,497 und die US 6,211,532 beschreiben Sonden und zugehörige Verfahren für optische Nahfeldmikroskope, mit welchen evaneszente Wellen von der Sonde detektiert werden. Bei diesen Mikroskopen wird die Probe von der Rückseite mit Licht bestrahlt und die Sonde nimmt die evaneszente Strahlung auf und wandelt diese in einen Photostrom um, dessen Signal für eine Bilderzeugung ausgewertet wird. In den gezeigten Verfahren wird jeweils eine hohle trichterförmige Grube in einem ersten Substrat geätzt und die Innenfläche der Grube mit einem transparenten Material beschichtet. Das erste Substrat wird dann mit einem zweiten Substrat zusammengefügt, woraufhin das erste Substrat soweit geätzt wird, bis eine inwendig hohle Sondenspitze auf dem zweiten Substrat herausgebildet ist. Das zweite Substrat wird in einem Bereich unterhalb der Sondenspitze so abgedünnt, dass ein dünner Träger entsteht, auf dem sich die Sondenspitze aufliegt.

Diese Verfahren weisen eine Vielzahl von Verfahrensschritten auf, wobei insbesondere der Fügeschritt zwischen den Einzelsubstraten kritisch hinsichtlich der erzielten Reproduzierbarkeit der Sondenabmessungen ist. Aufgrund des evaneszenten Funktionsprinzips ist bei solchen Sonden auch keine Möglichkeit einer Lichtzuführung zu der jeweiligen Sondenspitze vorgesehen.

Die Druckschrift JP 11-281657 beschreibt für optische Nahfeldmikroskope geeignete Sondenspitzenstrukturen und deren Herstellung. Über einen aus SiO₂ bestehenden Lichtwellenleiter, der entweder zwischen zwei dünnen Metallschichten auf der Oberseite eines Cantilevers angeordnet ist oder durch den Cantilever selbst realisiert wird, wird Licht von einem Lichteinkopplungsbereich zu einem Spitzenbereich der Sondenspitze übermittelt. Die Einkopplung des Lichtes erfolgt entweder in eine Endfläche des Wellenleiters oder senkrecht von unten in einen nicht abgedeckten Bereich des Cantilevers. Diese Form der Einkopplung erfordert einen hohen Justieraufwand und ist mit erheblichen Verlusten bei der Lichteinkopplung verbunden. Auch ist es mit der gezeigten Anordnung schwierig, das Licht von dem Wellenleiter zur Sondenspitze zu führen, wobei Lichtverluste auftreten, die sowohl die für die Messung nutzbare Intensität reduzieren als auch den Streulichtuntergrund erhöhen.

In der Druckschrift EP 0 860 726 A1 ist eine mit einer Hybridtechnik hergestellte, innen hohle Sondenspitze beschrieben. Bis in den Bereich unter dem Hohlraum der Sondenspitze führt ein Wellenleiter, in welchem in einem Bereich unterhalb der Spitze ein Diffraktibnsgitter eingebracht ist.

Die Druckschrift US 5,354,985 offenbart eine aus einem lichtundurchlässigen Material ausgebildete Sondenspitze, auf welcher eine Schichtfolge aus SiO₂, Si₃N₄ und Aluminium abgeschieden wurde. Die zwischen der SiO₂- und der Aluminiumschicht befindliche unstrukturierte Si₃N₄-Schicht dient als Lichtwellenleiter, der Licht zu der Sondenspitze führt.

In der Druckschrift DE 197 13 746 A1 ist ein kombinierter AFM/SNOM-Sensor gezeigt, bei welchem auf einem Federbalken, der aus einem zwischen zwei Mantelschichten eingebetteten Wellenleiter besteht, eine transparente Sondenspitze ausgebildet ist. Die Wellenleiterschicht weist keinerlei Strukturierung auf.

Die Druckschrift DE 43 14 301 C1 beschreibt eine Abtastvorrichtung, die Sensorspitzen aus photostrukturierbarem Glas aufweist. Möglichkeiten einer geeigneten Lichtein- oder Lichtauskopplung enthält diese Druckschrift nicht.

Die Druckschrift DE 195 09 903 A1 beinhaltet ein Verfahren zum Herstellen einer Abtastvorrichtung mit einer auf einem Mikroskopbalken angeordneten Sondenspitze. Die Sonde dieser Druckschrift zeigt keine Apertur und offenbart keine Möglichkeiten, wie geeignet Licht eingekoppelt und zur Spitze hingeleitet werden kann.

Es ist daher eine Aufgabe der vorliegenden Erfindung, eine Sonde für ein optisches Nahfeldmikroskop und ein Verfahren zu deren Herstellung zur Verfügung zu stellen, wobei die Sonde mit einer hohen Reproduzierbarkeit in einer einfachen Technologie gefertigt werden kann und die Sonde eine einfache aber effiziente Lichtzuführung zu der Sondenspitze aufweist.

Die Aufgabe wird bei einer Sonde der eingangs genannten Art erfindungsgemäß dadurch gelöst, dass der Lichteinkopplungsbereich und/oder der Lichtauskopplungsbereich eine diffraktive Struktur aufweist.

Die erfindungsgemäße Sonde besitzt den Vorteil, dass mit dem Träger, der die Sondenspitze aufweist, Licht mit Hilfe des Lichtwellenleiters zu der Sondenspitze geleitet werden kann. Somit kann eine hohe Genauigkeit und Effizienz der Lichtzuleitung zu der Sondenspitze erreicht werden. Weiterhin ermöglicht die Erfindung, dass die Sondenspitze auf eine technologisch einfache Weise mit hoher Reproduzierbarkeit mit einem Lichtwellenleiter gekoppelt werden kann. Die diffraktive Struktur ist besonders gut geeignet, um Licht in einen Bereich einzukoppeln oder es aus diesem Bereich auszukoppeln, wodurch das Licht effektiv genutzt werden kann.

Es ist zudem möglich, den Lichtwellenleiter genau zu der Sondenspitze bereits bei der Herstellung des Trägers zu positionieren, wobei die Sonde mit hoher Genauigkeit und reproduzierbaren Abmessungen gefertigt werden kann. Mit der erfindungsgemäßen Lösung kann auch eine Mehrzahl von Sonden parallel mit reproduzierbaren Eigenschaften gefertigt werden, was die Produktionskosten verringert und die Probleme bei einem Wechsel der Sonde in einem optischen Nahfeldmikroskop verringert.

Gemäß einer bevorzugten Ausführungsform der Erfindung ist die Sondenspitze auf einer planen Oberfläche des Trägers ausgebildet. Mit einer solchen Anordnung kann die Sondenspitze leicht mit einem hohen Grad an Genauigkeit und Reproduzierbarkeit gefertigt werden.

In einer günstigen Variante der Erfindung ist die Sondenspitze als eine Vollstruktur ausgebildet. Ein solcher Aufbau macht es möglich, dass die Sondenspitze aus einer einzigen Schicht hergestellt werden kann, wodurch die Sonde preiswert und dennoch mit hoher Genauigkeit ausgebildet werden kann.

In einer vorteilhaften Ausführungsform der Erfindung weist das transparente Material der Sondenspitze Siliziumoxid auf. Dieses Material ist besonders gut geeignet, um eine gute Lichtdurchlässigkeit der Sondenspitze zur Verfügung zu stellen, und ist zudem gut strukturierbar, wodurch ein sehr geringer Spitzenradius der Sondenspitze für eine hohe Auflösung der Sonde realisiert werden kann.

In einem günstigen Beispiel der Erfindung ist der Träger freitragend mit einem Substrat verbunden. Hierdurch wird erreicht, dass die Sonde schwingbar über einer Probe gehalten werden kann, so dass die Sonde während eines horizontalen Abscannens einer zu messenden Probenoberfläche vertikal nachgeführt werden kann.

Gemäß einer bevorzugten Ausführungsform der Erfindung weist die Sonde einen Lichteinkopplungsbereich auf. Der Lichteinkopplungsbereich hat den Vorteil, dass Licht verlustarm in die Sonde eingekoppelt werden kann.

Günstigerweise ist der Lichteinkopplungsbereich in dem Träger und/oder einem Substrat ausgebildet, mit dem der Träger verbunden ist. Damit ist eine effiziente Lichteinkopplung in den Träger möglich.

Gemäß einer besonders vorteilhaften Variante der Erfindung weist die Sonde einen Lichtauskopplungsbereich auf. Hiermit kann Licht gut von dem Lichtwellenleiter in die Sondenspitze eingebracht werden. Mit dieser besonderen Lichtauskopplung kann das Licht effizient auf eine kleine Öffnung in einem Spitzenbereich der Sondenspitze gelenkt werden.

Vorzugsweise ist der Lichtauskopplungsbereich in dem Träger nahe der Sondenspitze ausgebildet. Somit kann das Licht besonders gut in die Sondenspitze geleitet werden.

In einer besonders günstigen Ausführungsform der Erfindung ist der Lichteinkopplungsbereich und/oder der Lichtauskopplungsbereich in dem Lichtwellenleiter oder in einer transparenten Zwischenschicht zwischen dem Lichtwellenleiter und einem Substrat ausgebildet. Eine solche Konstruktion ermöglicht ein gutes Einkoppeln und/oder ein gutes Auskoppeln von Licht in bzw. aus dem Lichtwellenleiter, wodurch eine hohe Lichtausbeute erreichbar ist.

Entsprechend einer vorteilhaften Ausführungsform der Erfindung weist die diffraktive Struktur ein Koppelgitter auf. Das Koppelgitter eignet sich besonders gut, um lichtgezielt in den Lichteinkopplungsbereich und/oder den Lichtauskopplungsbereich zu koppeln.

Vorzugsweise weist das Koppelgitter gebogene Gitterlinien auf. Hiermit kann das Licht sehr gut fokussiert werden. Beispielsweise kann das Licht direkt auf einem relativ kleinen Öffnungsbereich in einem Spitzenbereich der Sondenspitze fokussiert werden.

In einem besonders günstigem Beispiel der Erfindung besteht der Lichtwellenleiter zumindest teilweise aus Siliziumnitrid. Dieses Material eignet sich besonders gut, um Licht in der Sonde zu leiten und ist zudem gut strukturierbar, so dass ein Lichtwellenleiter mit sehr guten Leitungseigenschaften zur Verfügung gestellt werden kann.

In einer weiteren besonderen Ausführungsform der Erfindung befindet sich an wenigstens einer Oberfläche des Lichtwellenleiters eine transparente Zwischenschicht, die im Vergleich zu einem Material des Lichtwellenleiters niederbrechend ist. Damit wird erreicht, dass Licht gut in dem Lichtwellenleiter geführt werden kann.

Gemäß einer bevorzugten Variante der Erfindung befindet sich die transparente Zwischenschicht zwischen dem Lichtwellenleiter und einem Substrat. Hierdurch wird eine Dämpfung der Lichtwellenleitung in dem Lichtwellenleiter durch das Substrat vermindert.

Vorteilhafterweise befindet sich die transparente Zwischenschicht zwischen dem Lichtwellenleiter und der Sondenspitze. Diese Zwischenschicht macht es möglich, dass das Licht gut in dem Lichtwellenleiter transportiert werden kann. Die transparente Zwischenschicht wirkt dabei als eine Art Abstandshalter, durch welchen eine Dämpfung des in dem Lichtwellenleiter geführten Lichts, die beispielsweise durch eine Metallschicht direkt auf dem Lichtwellenleiter erzeugt werden würde, verringert werden kann.

Gemäß einem weiteren vorteilhaften Beispiel der Erfindung besteht die transparente Zwischenschicht aus Siliziumoxid, Siliziumoxinitrid oder Magnesiumfluorid. Diese Materialien sind insbesondere wegen ihrer niedrigen Brechzahlen besonders gut geeignet, um eine Lichtdämpfung in dem Lichtwellenleiter, die von einem direkt an den Lichtwellenleiter angrenzenden Material wie z.B. Silizium oder einem Metall ausgehen würde, zu verringern. Zudem weisen diese Materialien eine hohe Transparenz auf und können vorteilhaft in einem Dünnfilmprozess hergestellt werden.

Gemäß einer bevorzugten Ausführungsform der Erfindung ist wenigstens eine Umfangsfläche und/oder ein Umgebungsbereich der Sondenspitze mit einem lichtundurchlässigen Material beschichtet. Mit einer solchen Beschichtung kann erreicht werden, dass ein Streulichteinfluss auf die zu messende Probe minimiert wird.

Vorzugsweise ist das lichtundurchlässige Material eine Metallschicht. Eine Metallschicht ist ab einer gewissen Mindestdicke hochgradig lichtundurchlässig, wodurch ein Streulichteinfluss bei der Detektion vermieden werden kann.

Vorteilhafterweise ist wenigstens ein Spitzenbereich der Sondenspitze lichtdurchlässig. Dieser Spitzenbereich dient vorteilhafterweise als eine Blende für die Sondenspitze.

Hinsichtlich eines Verfahrens zur Herstellung einer Sonde mit einer Sondenspitze wird die vorgenannte Aufgabe erfindungsgemäß gelöst durch ein Verfahren mit den Schritten: Aufbringen einer Beschichtung auf ein Substrat in einem ersten Schritt, wobei die Beschichtung einen Lichtwellenleiter aufweist; Aufbringen einer transparenten Schicht in einem zweiten Schritt, so dass der Lichtwellenleiter zwischen dem Substrat und der transparenten Schicht angeordnet ist; Maskieren der transparenten Schicht wenigstens in einem Bereich oberhalb der Sondenspitze in einem dritten Schritt; und isotropes Ätzen der transparenten Schicht unter Ausbildung der Sondenspitze, in einem vierten Schritt; ein Ausbilden eines Lichteinkopplungsbereiches in dem Substrat und/oder in der Beschichtung auf dem Substrat; ein Ausbilden eines Lichtauskopplungsbereiches in der Beschichtung auf dem Substrat; wobei das Ausbilden des Lichteinkopplungsbereiches und/oder des Lichtauskopplungsbereiches ein Ausbilden einer diffraktiven Struktur aufweist.

Das erfindungsgemäße Verfahren enthält eine Anzahl von Verfahrensschritten, die nacheinander vorzugsweise in einem Batchprozess ausgeführt werden können, wodurch eine Vielzahl von Sonden gleichzeitig auf einem Substrat hergestellt werden kann.. Damit wird erreicht, dass die einzelnen Verfahrensschritte genau aufeinander angepasst werden können, wodurch sehr hohe Genauigkeiten bei der hergestellten Sonde als auch hohe Reproduzierbarkeiten der Sondenabmessungen erreicht werden können. Mit dem erfindungsgemäßen Verfahren kann eine Sonde mit einem sehr geringen Sondenspitzenradius hergestellt werden, wobei die Sonde zusätzlich einen integrierten Lichtwellenleiter aufweist. Hiermit können sehr hohe optische Auflösungen der Sonde und eine einfache aber sehr effektive Lichtleitung in der Sonde erzielt werden.

Vorzugsweise weist der erste Schritt ein Aufbringen einer Siliziumnitridschicht auf, aus welcher der Lichtwellenleiter ausgebildet wird. Mit der Siliziumnitridschicht kann ein Lichtwellenleiter mit sehr guten Lichtleiteigenschaften hergestellt werden.

In einer günstigen Variante der Erfindung weist der erste Schritt ein Erzeugen wenigstens einer transparenten Zwischenschicht zwischen dem Substrat und dem Lichtwellenleiter auf, wobei das Material der transparenten Zwischenschicht im Vergleich zu dem Material des Lichtwellenleiters niederbrechend ist. Hiermit kann eine Sonde hergestellt werden, bei welcher das Licht gut in dem Lichtwellenleiter geleitet wird.

Nach einem besonders vorteilhaften Beispiel der Erfindung weist der erste Schritt ein Erzeugen wenigstens einer transparenten Zwischenschicht zwischen dem Lichtwellenleiter und der Sondenspitze auf, wobei das Material der transparenten Zwischenschicht im Vergleich zu dem Material des Lichtwellenleiters niederbrechend ist. Hiermit kann erreicht werden, dass das Licht vorrangig in dem Lichtwellenleiter geleitet wird. Zusätzlich kann dieser Verfahrensschritt den Effekt haben, dass eine Dämpfung, die beispielsweise von einem lichtundurchlässigen Material direkt auf den Lichtwellenleiter ausgehen würde, verringert wird.

Gemäß einer bevorzugten Ausführungsform der Erfindung weist das Erzeugen der Zwischenschicht ein Aufbringen wenigstens einer Schicht aus Siliziumoxid, Siliziumoxinitrid oder Magnesiumfluorid auf. Mit diesen Materialien kann eine Dämpfung eines lichtundurchlässigen Materials auf die Lichtleitung in dem Lichtwellenleiter unterdrückt werden.

Es wird weiter vorgeschlagen, dass das Verfahren ein Ausbilden eines Lichteinkopplungsbereiches in dem Substrat und/oder in der Beschichtung auf dem Substrat aufweist. Damit kann eine Sonde hergestellt werden, in die Licht sehr gut eingekoppelt werden kann, wodurch die Sonde mit einer hohen Lichtausbeute arbeiten kann.

In einer vorteilhaften Ausführungsform der Erfindung weist das Verfahren ein Ausbilden eines Lichtauskopplungsbereiches in der Beschichtung auf dem Substrat auf. Dieser Verfahrensschritt gewährleistet, dass aus der Sonde Licht gezielt austreten kann.

Eine vorteilhafte Weiterbildung der Erfindung kann darin bestehen, dass das Ausbilden des Lichteinkopplungsbereiches und/oder des Lichtauskopplungsbereiches ein Ausbilden einer diffraktiven Struktur aufweist. Mit diesem Verfahrensschritt kann in dem Lichteinkopplungsbereich und/oder dem Lichtaüskopplungsbereich der Sonde Licht gut in eine bestimmte Richtung geleitet werden.

Gemäß einer besonders günstigen Ausführungsform der Erfindung weist das Ausbilden einer diffraktiven Struktur ein Ätzen und/oder ein Prägen eines Koppelgitters auf. Hiermit lassen sich sehr genau Strukturen erzeugen, die Licht gut brechen oder beugen können und damit zu einer gezielten Ausrichtung des Lichtes innerhalb der Sonde beitragen können.

Günstigerweise kann die Erfindung so gestaltet sein, dass in dem zweiten Schritt die transparente Schicht mit einer Schichtdicke von etwa 1 bis 5 µm, vorzugsweise etwa 2 bis 20 µm oder optimal mit einer Schichtdicke von etwa 3 bis 8 µm, aufgebracht wird. Eine solche Dicke ermöglicht es, dass eine Sondenspitze mit steilen Seitenkanten und einem geringen Spitzenradius hergestellt werden kann, womit eine hochgenaue Detektion durch die Sonde erzielt werden kann.

In einem bevorzugten Beispiel der Erfindung weist das Verfahren ein Ätzen des Substrates unter Ausbildung eines freitragenden Trägers auf, der mit dem Substrat verbunden ist. Durch diesen Verfahrensschritt kann eine Sonde hergestellt werden, die schwingbar über einer Probenoberfläche angeordnet werden kann und somit gut bei einem horizontalen Abscannen der Probenoberfläche in vertikaler Richtung nachgeführt werden kann.

In einer günstigen Variante der Erfindung weist das Ätzen ein nasschemisches Ätzen und ein Trockenätzen auf. Durch die Kombination der beiden Ätzschritte ist es möglich, eine Ätzfront vorsichtig an eine Endsubstratdicke zur Ausbildung eines freitragenden Trägers anzunähern. Es kann auch erreicht werden, dass die Sondenspitze nicht oder nur wenig einem Angriff durch das Ätzen ausgesetzt ist.

Vorzugsweise ist das Ätzen der transparenten Schicht in dem vierten Schritt ein isotropes Ätzen oder eine Kombination aus isotropem und anisotropem Ätzen. Hiermit kann eine besonders gute Ausprägung der Sondenspitze erzielt werden, wobei die Sondenspitze vorzugsweise sehr steile Seitenkanten aufweist.

Es wird weiter vorgeschlagen, dass das Verfahren ein Aufbringen einer lichtundurchlässigen Schicht auf wenigstens eine Umfangsfläche der Sondenspitze und/oder einen Umgebungsbereich der Sondenspitze aufweist. Hiermit kann bei der fertigen Sonde ein Streulichteinfluss aus dem Umfangsflächenbereich der Sondenspitze und/oder einem Umgebungsbereich der Sondenspitze vermieden werden.

In einem vorteilhaften Beispiel der Erfindung wird die lichtundurchlässige Schicht schräg auf die Sondenspitze aufgedampft. Hiermit kann erreicht werden, dass wenigstens eine Umfangsfläche der Sondenspitze mit der lichtundurchlässigen Schicht bedeckt ist, während ein Spitzenbereich der Sondenspitze freigehalten werden kann.

In einer günstigen Variante der Erfindung weist das Verfahren ein Einbringen einer Öffnung in die lichtundurchlässige Schicht in einen Spitzenbereich der Sondenspitze unter Ausbildung einer Blende auf. Hierdurch kann ein lichtdurchlässiger Bereich in der Sondenspitze erzeugt werden, wobei der umgebende Bereich der Öffnung durch die lichtundurchlässigere Schicht abgedeckt bleibt und Streulicht vermieden wird.

Gemäß einer besonders vorteilhaften Variante der Erfindung erfolgt das Einbringen einer Öffnung mit einem Funkenerosionsverfahren und/oder einem Plasmaätzen. Diese Verfahren sind besonders gut geeignet, um eine Öffnung mit einem sehr kleinen Durchmesser zu erzeugen, beispielsweise in einer Metallschicht. Somit kann eine Sonde mit einem sehr kleinen Blendendurchmesser hergestellt werden.

Die Erfindung wird nachstehend anhand von Ausführungsbeispielen und zugehörigen Zeichnungen näher erläutert. In diesen zeigen:
- Figur 1: eine schematische Perspektivansicht einer Ausführungsform einer Sonde für ein optisches Nahfeldmikroskop;
- Figuren 2 bis 15: ein Ausführungsbeispiel eines Verfahrens zur Herstellung einer Sonde, beispielsweise der Sonde nach Figur 1, in schematischer Darstellung;
- Figur 16: eine schematische Draufsicht auf die Sondenspitzenseite einer Sonde mit einem Träger in Form eines Biegebalkens; und
- Figur 17: eine schematische Draufsicht auf die Sondenspitzenseite einer Sonde mit einem Träger in Form eines Dreiecks.

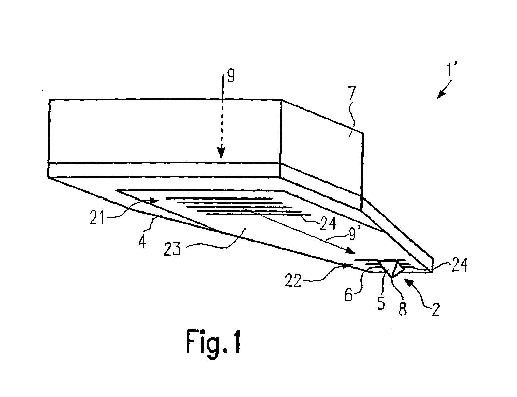

Figur 1 zeigt eine schematische Perspektivansicht einer Sonde 1 für ein optisches Nahfeldmikroskop nach einem Ausführungsbeispiel. Die Sonde weist einen planaren Träger 3 auf. Der planare Träger 3 hat eine etwa dreieckige Form besteht in dem gezeigten Beispiel aus Silizium, kann aber auch aus einem anderen Material, beispielsweise einem lichtdurchlässigen Material wie z.B. Glas bestehen. In einer anderen Ausführungsvariante kann der Träger 3 auch in Form eine etwa rechteckigen, länglichen Biegebalkens ausgebildet sein.

An der vorderen freien Spitze einer Längsoberfläche 4 des Trägers 3, die in Figur 1 nach unten zeigt, ist eine Sondenspitze 2 ausgebildet. Die Sondenspitze 2 ist in der gezeigten Ausführungsform pyramidenförmig ausgebildet, kann aber auch in einer anderen Ausführungsform beispielsweise kegelförmig ausgebildet sein.

Die gezeigte Sondenspitze 2 weist vier etwa dreieckige Umfangsflächen 5 auf und hat einen Spitzenbereich 8 mit einem sehr geringen Spitzenradius, der vorzugsweise < 100 Nanometer beträgt und dem gezeigten Beispiel in der Größenordnung von etwa 10 bis 30 Nanometern liegt. Die Sondenspitze 2 ist mit ihrer etwa rechteckigen oder auch runden Grundfläche (nicht gezeigt) auf einem Lichtwellenleiter 23 platziert. Dabei kann zwischen dem Lichtwellenleiter 23 der Sondenspitze 2 eine niedrigbrechende Zwischenschicht, beispielsweise eine Siliziumoxidschicht, eine Magnesiumfluoridschicht, eine Aluminiumfluoridschicht oder eine Schichtkombination aus diesen Materialien ausgebildet sein.

Der Lichtwellenleiter 23 besteht in der dargestellten Ausführungsform aus einem hochbrechenden Material wie Siliziumnitrid, kann aber auch aus Tantaloxid, Nioboxid, Zinnoxid, Titanoxid oder einer Kombination aus diesen Materialien aufgebaut sein. Er weist einen Lichteinkopplungsbereich 21 und einen Lichtauskopplungsbereich 22 auf. Die Bereiche 21 und 22 weisen jeweils Beugungsgitter 24 auf, die etwa parallel zueinander in einem Abstand voneinander in dem Lichtwellenleiter 23 ausgebildet sind. Die Beugungsgitter 24 dienen als diffraktive Strukturen, mit denen ein Lichtstrahl 9 in den Lichtwellenleiter 23 im Lichteinkopplungsbereich 21 eingekoppelt werden kann und im Lichtauskopplungsbereich 22 aus dem Lichtwellenleiter 23 in die Sondenspitze 2 ausgekoppelt werden kann. Vorteilhafterweise befindet sich deshalb der Lichtauskopplungsbereich in der gezeigten Darstellung direkt oberhalb der Sondenspitze 2.

Der Lichtstrahl 9 wird in dem Lichtwellenleiter 23 entlang einer Richtung 9' bis zur der Sondenspitze 2 geführt. Während eines Mikroskopierens wird der Lichtstrahl 9 aus dem Sondenspitzenbereich 8 der Sondenspitze 2 auf eine Probe (nicht gezeigt) geleitet.

Die Sonde 1 ist von einer Metallschicht 15, die vorzugsweise aus Aluminium besteht, (in Figur 1 nicht gezeigt) ummantelt, wobei der Spitzenbereich 8 der Sondenspitze 2 eine Öffnung in der Metallschicht 15 aufweist, durch die das Licht 9 auf eine Probe treffen kann.

Der Träger 3 der Sonde 1 ruht auf einem Substrat 7. Dabei ist der Bereich des Trägers 3, auf dem sich die Sondenspitze 2 befindet, als ein freitragender Träger mit dem Substrat 7 als Hebelstütze ausgebildet.

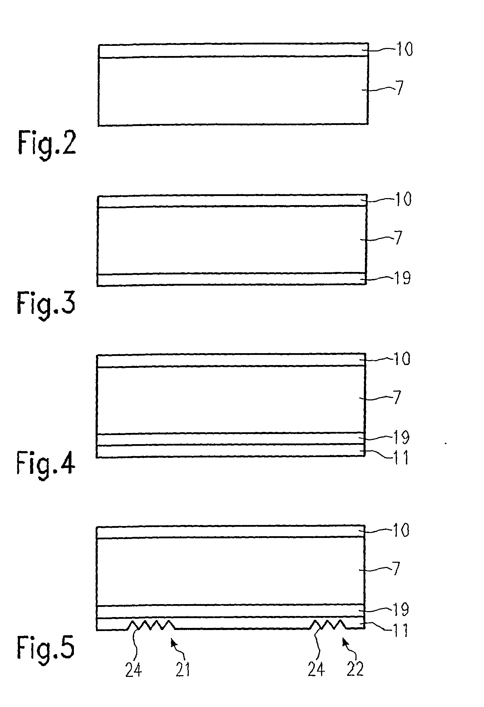

Figur 2 zeigt einen ersten Teilschritt einer beispielhaften Verfahrensführung zum Herstellen einer Sonde, wie der Sonde aus Figur 1. In dem ersten Teilschritt wird auf ein hier im Querschnitt dargestelltes Substrat 7 eine Schutzschicht 10 abgeschieden. Beispielsweise besteht die Schutzschicht 10 aus Siliziumnitrid, das z.B. mit einem CVD-Verfahren abgeschieden wird.

Die Figuren 3 bis 6 zeigen Teilschritte eines ersten Verfahrensschrittes des Verfahrensbeispiels.

Figur 3 zeigt einen zweiten Teilschritt des Verfahrensbeispiels, bei welchem auf die Struktur aus Figur 2 eine Pufferschicht 19 auf die der Schutzschicht 10 gegenüberliegende Seite des Substrates 7 aufgebracht wurde. Die Pufferschicht 19 besteht in der gezeigten Ausführungsform aus Siliziumoxid.

In anderen nicht gezeigten Ausführungsformen der Erfindung kann die Pufferschicht 19 aus einem anderen niederbrechenden Material wie beispielsweise Siliziumoxinitrid oder Magnesiumfluorid bestehen. Die Pufferschicht 19 weist vorzugsweise eine hohe Transparenz auf und kann vorteilhafter in einem Dünnfilmprozess, wie einem CVD-Verfahren, abgeschieden bzw. aufgebracht werden.

Figur 4 zeigt die Struktur aus Figur 3 wo nach einem dritten Teilschritt des Verfahrensbeispiels, bei welchem auf die Pufferschicht 19 eine Lichtwellenleiterschicht 11 aufgebracht wurde. Die Lichtwellenleiterschicht 11 besteht beispielsweise aus Siliziumnitrid und kann mit einem CVD-Verfahren abgeschieden werden.

In einer anderen, nicht gezeigten Ausführungsform der Erfindung kann die Lichtwellenleiterschicht 11 z.B. aus Tantaloxid, Titanoxid, Siliziumoxinitrid oder einem dotierten Siliziumoxid wie Phosphorsilikatglas ausgebildet werden. Insbesondere weist die Lichtwellenleiterschicht 11 aus einem Material mit hoher Brechzahl und hoher Transparenz auf. Vorzugsweise hat die Lichtwellenleiterschicht 11 eine hohe Resistenz beispielsweise gegenüber aggressiven Umgebungen und ist vorteilhafterweise in einem Dünnfilmabscheidungsprozess herstellbar.

Vorzugsweise werden das Material und die Abscheidungsparameter der Lichtwellenleiterschicht 11 so ausgewählt, dass der Lichtwellenleiter möglichst spannungsarm erzeugt werden kann, so dass der Lichtwellenleiter auch dann noch gerade bleibt, wenn das Substrat 7 weggeätzt ist.

Figur 5 zeigt die Struktur aus Figur 4 nach einem vierten Teilschritt des Verfahrensbeispiels. In dem vierten Teilschritt wurden in die Lichtwellenleiterschicht 11 gitterförmige diffraktive Strukturen 24 eingebracht, welche einen Lichteinkopplungsbereich 21 und einen Lichtauskopplungsbereich 22 definieren.

In anderen, nicht gezeigten Ausführungsformen der Erfindung können die diffrativen Strukturen 24 auch in die Pufferschicht 19 oder in das Substrat 7 beispielsweise durch Ätzen eingebracht werden. Zum Beispiel können dabei fokussierende Gitterstrukturen erzeugt werden, die das Licht in den Lichteinkopplungsbereich 21 zu dem Lichtwellenleiter 11 und/oder in dem Lichtauskopplungsbereich zu der Sondenspitze 2 hin bündeln. Dies kann durch gebogene Gitterlinien erreicht werden.

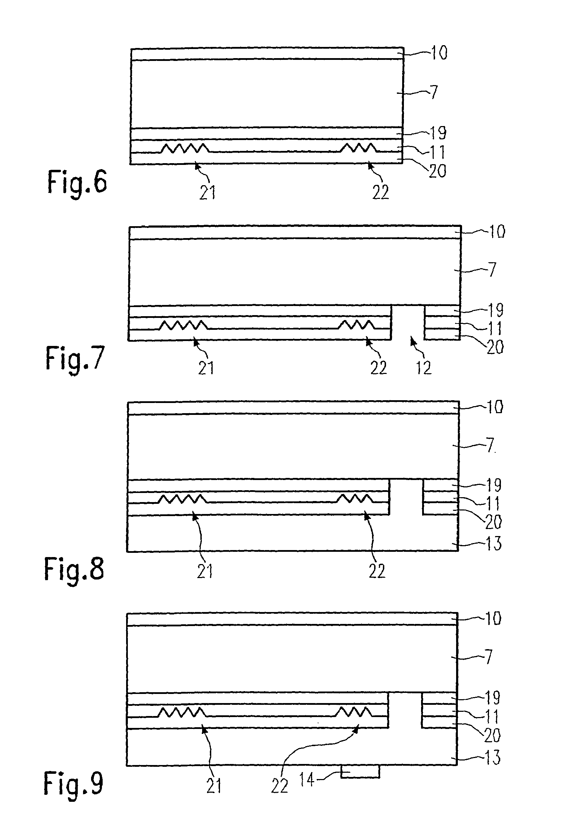

Figur 6 zeigt die Struktur aus Figur 5 nach einem fünften Teilschritt des Verfahrensbeispiels, in welchem auf die strukturierte Lichtwellenleiterschicht 11 eine weitere Pufferschicht 20 aufgebracht wurde. Die weitere Pufferschicht 20 besteht aus einem wiederbrechenden transparenten Material wie beispielsweise Siliziumoxid oder Magnesiumfluorid und kann in einem Dünnfilmabscheidungsprozess, wie z.B. einem CVD-Verfahren abgeschieden werden.

Figur 7 zeigt die Struktur aus Figur 6 nach einem sechsten Teilschritt des Verfahrensbeispiels. In dem sechsten Teilschritt wird zunächst eine Maskierungsschicht auf die Pufferschicht 22 aufgebracht, diese wird mittels einer Photolithographie strukturiert, so dass ein Fenster in der Maskierungsschicht oberhalb eines zu ätzenden Öffnungsbereiches 12 verbleibt. Durch das Fenster in der Maskierungsschicht wird die Pufferschicht 20, die Lichtwellenleiterschicht 11 und die Pufferschicht 19 bis an das Substrat 7 geätzt. Es entsteht der Öffnungsbereich 12 in Form eines Grabens mit etwa senkrechten Seitenwänden, welcher später die Struktur des freitragenden Trägers 3 der Sonde 1 definiert.

Figur 8 zeigt die Struktur aus Figur 7 nach einem siebenten Teilschritt bzw. einem dritten Verfahrensschritt des Verfahrensbeispiels. In diesem Verfahrensschritt wird eine transparente Schicht 13 auf die Seite der Struktur aus Figur 7 aufgebracht, auf welcher sich der Öffnungsbereich 12 befindet. Die transparente Schicht 13 wird im gezeigten Beispiel mit einer Dicke von etwa 5 µm aufgebracht. Sie besteht in der gezeigten Ausführungsform aus Siliziumoxid und kann mit einem CVD-Verfahren abgeschieden werden.

In anderen Ausführungsbeispielen beträgt die Schichtdicke der transparenten Schicht 13 etwa 1 bis 30 µm, vorzugsweise etwa 2 bis 20 µm oder in einer optimalen Variante der Erfindung etwa 3 bis 8 µm.

Figur 9 zeigt die Struktur aus Figur 8 nach einem achten Teilschritt bzw. einen dritten Verfahrensschritt des Verfahrensbeispiels, in welchem auf die transparente Schicht 13 mit eine Maskierung 14 aufgebracht wurde. Zum Herstellen der Maskierung 14 wurde zunächst flächig eine Schicht 14 auf die transparente Schicht 13 aufgebracht. Die Schicht 14 kann beispielsweise aus α-Silizium bestehen, welches beispielsweise mittels eines Sputter-Verfahrens oder eines Aufdampfverfahrens abgeschieden wurde. Die α-Silizium-Schicht kann in einer besonderen Ausführungsform der Erfindung auch dotiert werden. Die α-Silizium-Schicht mittels einer Photolithographie so strukturiert, dass ein Schichtbereich der Schicht 14, wie in Figur 9 gezeigt, in einem Bereich auf der transparenten Schicht 13 verbleibt, bei welchem die Sondenspitze 2 ausgebildet werden soll. Dieser Bereich entspricht etwa dem Bereich, der dem Lichtauskopplungsbereich 22 gegenüber ist.

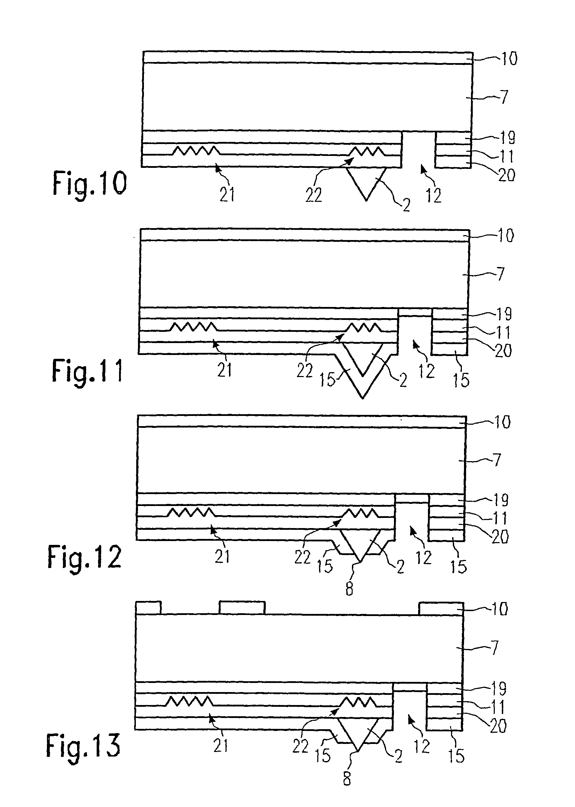

Figur 10 zeigt die Struktur aus Figur 9 nach einem neunten Teilschritt bzw. einen vierten Verfahrensschritt des Verfahrensbeispiels, in welchem die transparente Schicht 13 mittels eines isotropen Ätzschrittes oder mittels einer Kombination aus isotropem und anisotropem Ätzen, beispielsweise nasschemisch mit einem HF-Ätzer in Kombination mit einem Trockenätzschritt, geätzt wurde. Dabei entsteht auf der Pufferschicht 20 eine etwa pyramidenförmige oder kegelförmige Struktur, die Sondenspitze 2. Die Sondenspitze 2 ist mit ihrer Auflagefläche dem Lichtauskopplungsbereich 22 etwa gegenüber. In einer bevorzugten Ausführungsform der Erfindung kann vor dem nasschemischen Ätzen eine laterale Vorstrukturierung mit einem oder mehreren Trockenätzschritten erfolgen.

Figur 11 zeigt die Struktur aus Figur 10 nach einem zehnten Teilschritt des Verfahrensbeispiels. In dem zehnten Teilschritt wird auf die Seite der Struktur aus Figur 10, welche die Sondenspitze 2 aufweist, eine lichtundurchlässige Schicht 15 aufgebracht. Die lichtundurchlässige Schicht 15 kann beispielsweise eine Metallschicht, wie z.B. eine Aluminiumschicht sein, die beispielsweise mit einem Sputter-Verfahren oder einem Bedampfungsverfahren aufgebracht werden kann.

Figur 12 zeigt die Struktur aus Figur 11 nach einem elften Teilschritt des Verfahrensbeispiels, in welchem ein Funkenerosionsverfahren und/oder ein Plasmaätzverfahren dazu dient, die lichtundurchlässige Schicht 15 in dem Spitzenbereich 8 der Sondenspitze 2 zu öffnen. Der geöffnete Sondenspitzenbereich 8 hat etwa einen Durchmesser von < 100 Nanometern, vorzugsweise von etwa 20 bis 50 Nanometern.

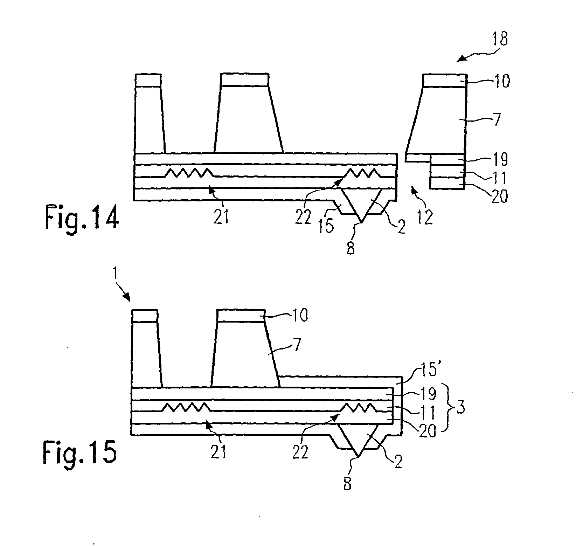

Figur 13 zeigt die Struktur aus Figur 12 nach einem zwölften Teilschritt des Verfahrensbeispiels. In dem zwölften Teilschritt wird die Schutzschicht 10 auf der der Sondenspitze 2 gegenüberliegenden Seite der Struktur aus Figur 12 strukturiert. Hierfür wird im gezeigten Beispiel ein Trockenätzverfahren eingesetzt. In anderen, nicht gezeigten Verfahrensbeispielen kann auch ein Nassätzen verwendet werden. Nach der Strukturierung verbleiben solche Bereich der Schutzschicht 10, die Bereiche des Substrates 7 abdecken sollen, die in einem folgenden Schritt, wie in Figur 14 gezeigt, nicht geätzt werden sollen.

Figur 14 zeigt die Struktur aus Figur 13 nach einem dreizehnten Teilschritt des Verfahrensbeispiels, bei welchem die Struktur auf Figur 13 unter Verwendung der verbleibenden Bereiche der Schutzschicht 10 als Maskierungsschicht geätzt und eine Metallisierungsschicht 15 auf die Unterseite der Struktur bzw. die Sondenspitzenseite aufgebracht wurde. Die Ätzung kann mit einer nasschemischen Ätzung, beispielsweise mit KOH, erfolgen. Jedoch kann bei einer rein nasschemischen Ätzung eine unerwünschte Ätzung der Sondenspitze auf der anderen Waferseite erfolgen. Gemäß einer Ausführungsform des erfindungsgemäßen Verfahrens kann daher eine kombinierte Ätzung aus nasschemischer Ätzung und anschließender Trockenätzung angewendet werden, womit die Ätzfronten vorsichtig dem Ätzgrund zur Erzeugung der freitragenden Struktur 3 angenähert werden können. Am Ende des Ätzschrittes ist der Teil der Struktur, auf dem sich die Sondenspitze 2 befindet, von einem verbleibenden Material 18 getrennt.

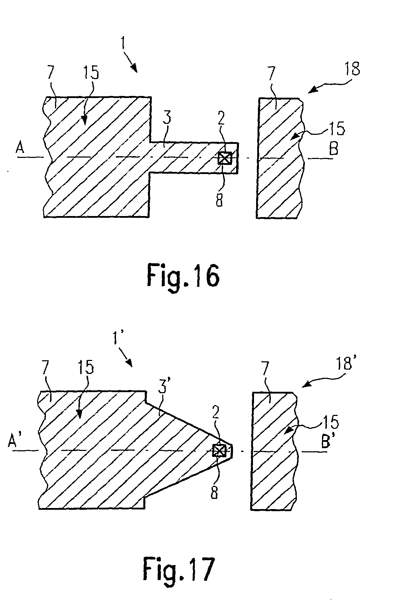

Die Metallisierungsschicht 15 kann ganzflächig auf die geätzte Struktur, beispielsweise mittels eines Sputterverfahrens oder einer Bedampfung aufgebracht werden. Im folgenden kann dann der Sondenspitzenbereich 8 der Sondenspitze 2 z.B. mit einem Funkenerosionsverfahren freigelegt werden. In einem weiteren vorteilhaften Verfahren kann die Metallisierungsschicht 15 so von der Seite her auf die Sondenspitzenseite der Sonde 1 aufgebracht werden, dass nur der Sondenspitzenbereich 8 frei bleibt. Figur 14 entspricht etwa dem Querschnitt entlang der Schnittlinie A-B in Figur 16.

Figur 15 zeigt die Struktur mit der Sondenspitze 2 aus Figur 14 nach einem letzten Teilschritt des Verfahrensbeispiels, bei welchem abschließend eine Metallisierung 15' der Oberseite der Struktur erfolgt. Mit diesem Schritt ist der gesamte Bereich des Lichtwellenleiters 11 bis auf den Sondenspitzenbereich 8 der Sondenspitze 2 mit einer Metallisierungsschicht 15 bzw. 15' ummantelt, wodurch ein Auftreten von Streulicht bei der Detektion verringert oder vermieden werden kann.

Figur 16 zeigt eine Draufsicht auf die Sondenspitzenseite der Sonde 1 und die Unterseite des verbleibenden Materials 18 der Figur 14. Die Sonde 1 weist einen Träger 3 in Form eines in der Draufsicht rechteckigen länglichen Biegebalkens auf. In der Nähe des freien Endes des Biegebalkens 3 ist die Sondenspitze 2 ausgebildet. Die Sondenspitzenseite der Sonde 1 und die Unterseite des verbleibenden Materials 18 sind flächig mit der Metallisierungsschicht 15, bis auf den Sondenspitzenbereich 8 der Sondenspitze 2, bedeckt.

Figur 17 zeigt eine weitere Variante einer Sonde 1', die ähnlich wie die Sonde 1 hergestellt werden kann, aber eine andere Trägerform aufweist. Die Sonde 1' ist in Figur 17 in der Draufsicht auf die Sondenspitzenseite und mit einem verbleibenden Material 18' nach der Ätzung und der Metallisierungsschichtabscheidung dargestellt. Die Sondenform der Sonde 1' entspricht etwa der Sonde 1', die in Figur 1 dargestellt ist. Die Sonde 1' weist einen Träger 3' auf, der etwa dreieckig ausgebildet ist. An der freien Spitze des Dreiecks des Trägers 3' ist die Sondenspitze 2 ausgebildet. Die Sondenspitzenseite der Sonde 1' als auch die Unterseite des verbleibenden Materials 18' ist flächig mit der Metallisierungsschicht 15, bis auf den Sondenspitzenbereich 8 der Sondenspitze 2, bedeckt. Die dreieckige Form des Trägers 3' hat den Vorteil, dass Torsionsschwingungen des Trägers bzw. Cantilevers gut unterdrückt werden.

Eine Vereinzelung der Strukturen erfolgt z.B. mit einer Standard-Wafersäge. Die Sondenspitze 2 und der Träger 3 bedürfen bei diesem Schritt eines besonderen mechanischen Schutzes.

## Patentansprüche

1. Sonde (1) für ein optisches Nahfeldmikroskop, welche einen planaren Träger (3) mit einer Sondenspitze (2) aufweist, wobei die Sondenspitze (2) zumindest teilweise aus einem transparenten Material besteht und als eine Vollstruktur ausgebildet ist, und der Träger (3) einen Lichtwellenleiter mit einem Lichteinkopplungsbereich (21) und/oder einem Lichtauskopplungsbereich (22) aufweist, **dadurch gekennzeichnet, dass** der Lichteinkopplungsbereich (21) und/oder der Lichtauskopplungsbereich (22) eine diffraktive Struktur aufweist.

2. Sonde nach Anspruch 1, **dadurch gekennzeichnet, dass** die Sondenspitze (2) auf einer planen Oberfläche (4) des Trägers (3) ausgebildet ist.

3. Sonde nach wenigstens einem der vorhergehenden Ansprüche, **dadurch gekennzeichnet, dass** das transparente Material der Sondenspitze (2) Siliziumoxid aufweist.

4. Sonde nach wenigstens einem der vorhergehenden Ansprüche, **dadurch gekennzeichnet, dass** der Träger (3) freitragend mit einem Substrat (7) verbunden ist.

5. Sonde nach wenigstens einem der vorhergehenden Ansprüche, **dadurch gekennzeichnet, dass** der Lichteinkopplungsbereich (21) in dem Träger (3) und/oder einem Substrat (7) ausgebildet ist, mit dem der Träger (3) verbunden ist.

6. Sonde nach wenigstens einem der vorhergehenden Ansprüche, **dadurch gekennzeichnet, dass** der Lichtauskopplungsbereich (22) in dem Träger (3) nahe der Sondenspitze (2) ausgebildet ist.

7. Sonde nach wenigstens einem der vorhergehenden Ansprüche, **dadurch gekennzeichnet, dass** der Lichteinkopplungsbereich (21) und/oder der Lichtauskopplungsbereich (22) in dem Lichtwellenleiter (23) oder in einer transparenten Zwischenschicht (19) zwischen dem Lichtwellenleiter (23) und einem Substrat (7) ausgebildet ist.

8. Sonde nach wenigstens einem der vorhergehenden Ansprüche, **dadurch gekennzeichnet, dass** die diffraktive Struktur ein Koppelgitter (24) aufweist.

9. Sonde nach Anspruch 8, **dadurch gekennzeichnet, dass** das Koppelgitter (24) gebogene Gitterlinien aufweist.

10. Sonde nach wenigstens einem der vorhergehenden Ansprüche, **dadurch gekennzeichnet, dass** der Lichtwellenleiter (23) zumindest teilweise aus Siliziumnitrid besteht.

11. Sonde nach wenigstens einem der vorhergehenden Ansprüche, **dadurch gekennzeichnet, dass** sich an wenigstens einer Oberfläche des Lichtwellenleiters (23) eine transparente Zwischenschicht (19, 20) befindet, die im Vergleich zu einem Material des Lichtwellenleiters niederbrechend ist.

12. Sonde nach Anspruch 11, **dadurch gekennzeichnet, dass** sich die transparente Zwischenschicht (19) zwischen dem Lichtwellenleiter (23) und einem Substrat (7) befindet.

13. Sonde nach wenigstens einem der Ansprüche 11 oder 12, **dadurch gekennzeichnet, dass** sich die transparente Zwischenschicht (20) zwischen dem Lichtwellenleiter (23) und der Sondenspitze (2) befindet.

14. Sonde nach wenigstens einem der Ansprüche 11 bis 13, **dadurch gekennzeichnet, dass** die transparente Zwischenschicht (19, 20) aus Siliziumoxid, Siliziumoxinitrid oder Siliziumnitrid besteht.

15. Sonde nach wenigstens einem der vorhergehenden Ansprüche, **dadurch gekennzeichnet, dass** wenigstens eine Umfangsfläche (5) und/oder ein Umgebungsbereich (6) der Sondenspitze (2) mit einem lichtundurchlässigen Material beschichtet ist.

16. Sonde nach Anspruch 15, **dadurch gekennzeichnet, dass** das lichtundurchlässige Material eine Metallschicht (15) ist.

17. Sonde nach wenigstens einem der vorhergehenden Ansprüche, **dadurch gekennzeichnet, dass** wenigstens ein Spitzenbereich (8) der Sondenspitze (2) lichtdurchlässig ist.

18. Verfahren zum Herstellen einer Sonde (1) mit einer Sondenspitze (2) für ein optisches Nahfeldmikroskop, insbesondere einer Sonde (1) nach Anspruch 1, wobei das Verfahren die Schritte umfasst:
- Aufbringen einer Beschichtung auf ein Substrat (7) in einem ersten Schritt, wobei die Beschichtung einen Lichtwellenleiter (23) aufweist;
- Aufbringen einer transparenten Schicht (13) in einem zweiten Schritt, so dass der Lichtwellenleiter (23) zwischen dem Substrat (7) und der transparenten Schicht (13) angeordnet ist;
- Maskieren der transparenten Schicht (13) wenigstens in einem Bereich der Sondenspitze (2) in einem dritten Schritt und;
- isotropes Ätzen der transparenten Schicht (13) unter Ausbildung der Sondenspitze (2) in einem vierten Schritt
**dadurch gekennzeichnet, dass** das Verfahren weiter folgende Schritte aufweist:
- ein Ausbilden eines Lichteinkopplungsbereiches (21) in dem Substrat (7) und/oder in der Beschichtung auf dem Substrat (7);
- ein Ausbilden eines Lichtauskopplungsbereiches (22) in der Beschichtung auf dem Substrat (7);
wobei das Ausbilden des Lichteinkopplungsbereiches (21) und/oder des Lichtauskopplungsbereiches (22) ein Ausbilden einer diffraktiven Struktur aufweist.

19. Verfahren nach Anspruch 18, **dadurch gekennzeichnet, dass** der erste Schritt ein Aufbringen einer Siliziumnitridschicht (11) aufweist, aus welcher der Lichtwellenleiter (23) ausbildet wird.

20. Verfahren nach wenigstens einem der Ansprüche 18 oder 19, **dadurch gekennzeichnet, dass** der erste Schritt ein Erzeugen wenigstens einer transparenten Zwischenschicht (19) zwischen dem Substrat (7) und dem Lichtwellenleiter (23) aufweist, wobei das Material der transparenten Zwischenschicht (19) im Vergleich zu dem Material des Lichtwellenleiters (23) niederbrechend ist.

21. Verfahren nach wenigstens einem der Ansprüche 18 bis 20, **dadurch gekennzeichnet, dass** der erste Schritt ein Erzeugen wenigstens einer transparenten Zwischenschicht (20) zwischen dem Lichtwellenleiter (23) und der Sondenspitze (2) aufweist, wobei das Material der weiteren transparenten Zwischenschicht (20) im Vergleich zu dem Material des Lichtwellenleiters (23) niederbrechend ist.

22. Verfahren nach wenigstens einem der Ansprüche 20 oder 21, **dadurch gekennzeichnet, dass** das Erzeugen der Zwischenschicht (19, 20) ein Aufbringen wenigstens einer Schicht aus Siliziumoxid, Siliziumoxinitrid oder Magnesiumfluorid enthält.

23. Verfahren nach wenigstens einem der Ansprüche 18 bis 22, **dadurch gekennzeichnet, dass** das Ausbilden der diffraktiven Struktur ein Ätzen und/oder ein Prägen eines Koppelgitters (24) aufweist.

24. Verfahren nach wenigstens einem der Ansprüche 18 bis 23, **dadurch gekennzeichnet, dass** in dem zweiten Schritt die transparente Schicht (13) mit einer Schichtdicke von etwa 1 bis 30 µm, vorzugsweise etwa 2 bis 20 µm oder optimal mit einer Schichtdicke von etwa 3 bis 8 µm aufgebracht wird.

25. Verfahren nach wenigstens einem der Ansprüche 18 bis 24, **gekennzeichnet durch** ein Ätzen des Substrates (7) unter Ausbildung eines freitragenden Trägers (3), der mit dem Substrat (7) verbunden ist.

26. Verfahren nach Anspruch 25, **dadurch gekennzeichnet, dass** das Ätzen des Substrates (7) ein nasschemisches Ätzen und ein Trockenätzen aufweist.

27. Verfahren nach wenigstens einem der Ansprüche 18 bis 26, **dadurch gekennzeichnet, dass** das Ätzen der transparenten Schicht (13) in einem vierten Schritt ein isotropes Ätzen oder eine Kombination aus isotropem und anisotropem Ätzen ist.

28. Verfahren nach wenigstens einem der Ansprüche 18 bis 27, **gekennzeichnet durch** ein Aufbringen einer lichtundurchlässigen Schicht (15) auf wenigstens eine Umfangsfläche (5) der Sondenspitze (2) und/oder einen Umgebungsbereich (6) der Sondenspitze (2).

29. Verfahren nach Anspruch 28, **dadurch gekennzeichnet, dass** die lichtundurchlässige Schicht (15) schräg auf die Sondenspitze (2) aufgedampft wird.

30. Verfahren nach wenigstens einem der Ansprüche 28 oder 29, **gekennzeichnet durch** ein Einbringen einer Öffnung in die lichtundurchlässige Schicht (15) in einen Spitzenbereich (8) der Sondenspitze (2) unter Ausbildung einer Blende.

31. Verfahren nach Anspruch 30, **dadurch gekennzeichnet, dass** das Einbringen einer Öffnung mit einem Funkenerosionsverfahren und/oder einem Plasmaätzen erfolgt.

## Claims

1. A probe (1) for an optical near field microscope which exhibits a planar carrier (3) comprising a probe tip (2), the probe tip (2) consisting at least partially of a transparent material and being formed as a full structure, and the carrier (3) comprising an optical waveguide with a light entry region (21) and/or a light exit region (22), **characterised in that** the light entry region (21) and/or the light exit region (22) exhibits a diffractive structure.

2. The probe according to Claim 1, **characterised in that** the probe tip (2) is formed on a planar surface (4) of the carrier (3).

3. The probe according to at least one of the previous claims, **characterised in that** the transparent material of the probe tip (2) comprises silicon oxide.

4. The probe according to at least one of the previous claims, **characterised in that** the carrier (3) is joined as a cantilever to a substrate (7).

5. The probe according to at least one of the previous claims, **characterised in that** the light entry region (21) is formed in the carrier (3) and/or in a substrate (7) to which the carrier (3) is joined.

6. The probe according to at least one of the previous claims, **characterised in that** the light exit region (22) is formed in the carrier (3) close to the probe tip (2).

7. The probe according to at least one of the previous claims, **characterised in that** the light entry region (21) and/or the light exit region (22) is formed in the optical waveguide (23) or in a transparent intermediate layer (19) between the optical waveguide (23) and a substrate (7).

8. The probe according to at least one of the previous claims, **characterised in that** the diffractive structure exhibits a coupling grid (24).

9. The probe according to Claim 8, **characterised in that** the coupling grid (24) comprises curved grid lines.

10. The probe according to at least one of the previous claims, **characterised in that** the optical waveguide (23) consists at least partially of silicon nitride.

11. The probe according to at least one of the previous claims, **characterised in that** a transparent intermediate layer (19, 20), which is low-refracting in comparison to a material of the optical waveguide, is located on at least one surface of the optical waveguide (23).

12. The probe according to Claim 11, **characterised in that** the transparent intermediate layer (19) is located between the optical waveguide (23) and a substrate (7).

13. The probe according to at least one of the Claims 11 or 12, **characterised in that** the transparent intermediate layer (20) is located between the optical waveguide (23) and the probe tip (2).

14. The probe according to at least one of the Claims 11 to 13, **characterised in that** the transparent intermediate layer (19, 20) consists of silicon oxide, silicon oxinitride or silicon nitride.

15. The probe according to at least one of the previous claims, **characterised in that** at least one circumferential area (5) and/or a surrounding region (6) of the probe tip (2) is coated with a material that is opaque to light.

16. The probe according to Claim 15, **characterised in that** the opaque material is a metal layer (15).

17. The probe according to at least one of the previous claims, **characterised in that** at least one tip region (8) of the probe tip (2) is transparent to light.

18. A method for the production of a probe (1) with a probe tip (2) for an optical near field microscope, in particular of a probe (1) according to Claim 1, wherein the method comprises the steps:
- application of a coating to a substrate (7) in a first step, wherein the coating exhibits an optical waveguide (23);
- application of a transparent layer (13) in a second step, so that the optical waveguide (23) is arranged between the substrate (7) and the transparent layer (13);
- masking of the transparent layer (13) at least in one region of the probe tip (2) in a third step; and
- isotropic etching of the transparent layer (13) with the formation of the probe tip (2) in a fourth step,
**characterised in that** the method comprises further the following steps:
- the formation of a light entry region (21) in the substrate (7) and/or in the coating on the substrate (7);
- the formation of a light exit region (22) in the coating on the substrate (7);
wherein the formation of the light entry region (21) and/or of the light exit region (22) comprises the formation of a diffractive structure.

19. The method according to Claim 18, **characterised in that** the first step exhibits an application of a silicon nitride layer (11) from which the optical waveguide (23) is formed.

20. The method according to at least one of the Claims 18 or 19, **characterised in that** the first step comprises the production of at least one transparent intermediate layer (19) between the substrate (7) and the optical waveguide (23), wherein the material of the transparent intermediate layer (19) is low-refracting in comparison to the material of the optical waveguide (23).

21. The method according to at least one of the Claims 18 to 20, **characterised in that** the first step exhibits the production of at least one transparent intermediate layer (20) between the optical waveguide (23) and the probe tip (2), wherein the material of the additional transparent intermediate layer (20) is low-refracting in comparison to the material of the optical waveguide (23).

22. The method according to at least one of the Claims 20 or 21, **characterised in that** the production of the intermediate layer (19, 20) comprises an application of at least one layer of silicon oxide, silicon oxinitride or magnesium fluoride.

23. The method according to at least one of the Claims 18 to 22, **characterised in that** the formation of the diffractive structure comprises an etching and/or stamping of a coupling grid (24).

24. The method according to at least one of the Claims 18 to 23, **characterised in that** in the second step the transparent layer (13) is applied with a layer thickness of approximately 1 to 30 µm, preferably approximately 2 to 20 µm or optimally with a layer thickness of approximately 3 to 8 µm.

25. The method according to at least one of the Claims 18 to 24, **characterised by** an etching of the substrate (7) with the formation of a cantilever carrier (3) which is joined to the substrate (7).

26. The method according to Claim 25, **characterised in that** the etching of the substrate (7) comprises a wet chemical etching and a dry etching.

27. The method according to at least one of the Claims 18 to 26, **characterised in that** the etching of the transparent layer (13) in a fourth step is an isotropic etching or a combination of isotropic and anisotropic etching.

28. The method according to at least one of the Claims 18 to 27, **characterised by** an application of a layer (15), opaque to light, on at least one circumferential area (5) of the probe tip (2) and/or a surrounding region (6) of the probe tip (2).

29. The method according to Claim 28, **characterised in that** the opaque layer (15) is vapour-deposited diagonally onto the probe tip (2).

30. The method according to at least one of the Claims 28 or 29, **characterised by** an application of an opening in the opaque layer (15) in a tip region (8) of the probe tip (2) with the formation of an aperture.

31. The method according to Claim 30, **characterised in that** the application of an opening occurs with a spark erosion method and/or plasma etching.

## Revendications

1. Sonde pour un microscope optique à champ proche qui présente un support planaire (3) avec une pointe de sonde (2), dans lequel la pointe de sonde (2) est composée au moins en partie d'un matériau transparent et est formée en une structure pleine, et le support (3) présente une fibre optique dotée d'une zone de couplage de la lumière (21) et/ou d'une zone d'extraction de la lumière (22), **caractérisée en ce que** la zone de couplage de la lumière (21) et/ou la zone d'extraction de la lumière (22) présente une structure diffractive.

2. Sonde selon la revendication 1, **caractérisée en ce que** la pointe de la sonde (2) est formée d'une surface plane (4) du support (3).

3. Sonde selon au moins l'une quelconque des revendications précédentes, **caractérisée en ce que** le matériau transparent de la pointe de sonde (2) présente de l'oxyde de silicium.

4. Sonde selon au moins l'une quelconque des revendications précédentes, **caractérisée en ce que** le support (3) est lié en porte-à-faux à un substrat (7).

5. Sonde selon au moins l'une quelconque des revendications précédentes, **caractérisée en ce que** la zone de couplage de la lumière (21) est formée dans le support (3) et/ou un substrat (7), est liée au support (3).

6. Sonde selon au moins l'une quelconque des revendications précédentes, **caractérisée en ce que** la zone d'extraction de la lumière (22) est formée dans le support (3) à proximité de la pointe de la sonde (2).

7. Sonde selon au moins l'une quelconque des revendications précédentes, **caractérisée en ce que** la zone de couplage de la lumière (21) et/ou la zone d'extraction de la lumière (22) est formée dans la fibre optique (23) ou dans une couche intermédiaire transparente (19) entre la fibre optique (23) et un substrat (7).

8. Sonde selon au moins l'une quelconque des revendications précédentes, **caractérisée en ce que** la structure diffractive présente une grille de couplage (24).

9. Sonde selon la revendication 8, **caractérisée en ce que** la grille de couplage (24) présente des lignes de quadrillage courbées.

10. Sonde selon au moins l'une quelconque des revendications précédentes, **caractérisée en ce que** la fibre optique (23) est composée au moins en partie de nitrure de silicium.

11. Sonde selon au moins l'une quelconque des revendications précédentes, **caractérisée en ce qu'**au moins sur une surface de la fibre optique (23) se trouve une couche intermédiaire transparente (19, 20) qui est faiblement réfractive par rapport à un matériau de la fibre optique.

12. Sonde selon la revendication 11, **caractérisée en ce que** la couche intermédiaire transparente (19) se trouve entre la fibre optique (23) et un substrat (7).

13. Sonde selon au moins l'une quelconque des revendications 11 ou 12, **caractérisée en ce que** la couche intermédiaire transparente (20) se trouve entre la fibre optique (23) et la pointe de la sonde (2).

14. Sonde selon au moins l'une quelconque des revendications 11 à 13, **caractérisée en ce que** la couche intermédiaire transparente (19, 20) se compose d'oxyde de silicium, d'oxynitrure de silicium ou de nitrure de silicium.

15. Sonde selon au moins l'une quelconque des revendications précédentes, **caractérisée en ce qu'**au moins une surface périphérique (5) et/ou une zone périphérique (6) de la pointe de la sonde (2) est revêtue d'un matériau transparent à la lumière.

16. Sonde selon la revendication 15, **caractérisée en ce que** le matériau transparent à la lumière est une couche métallique (15).

17. Sonde selon au moins l'une quelconque des revendications précédentes, **caractérisée en ce qu'**au moins une zone de pointe (8) de la pointe de sonde (2) est transparente à la lumière.

18. Procédé de fabrication d'une sonde (1) dotée d'une pointe de sonde (2) pour un microscope optique à champ proche, en particulier d'une sonde (1) selon la revendication 1, le procédé comprenant les étapes consistant à :
- appliquer un revêtement sur un substrat (7) dans une première étape, le revêtement présentant une fibre optique (23) ;
- appliquer une couche transparente (13) dans une deuxième étape de sorte que la fibre optique (23) soit disposée entre le substrat (7) et la couche transparente (13) ;
- masquer la couche transparente (13) au moins dans une zone de la pointe de la sonde (2) dans une troisième étape et ;
- graver de façon isotrope la couche transparente (13) en formant la pointe de la sonde (2) dans une quatrième étape,
**caractérisé en ce que** le procédé présente d'autres étapes suivantes :
- la formation d'une zone de couplage de la lumière (21) dans le substrat (7) et/ou dans le revêtement sur le substrat (7) ;
- la formation d'une zone d'extraction de la lumière (22) dans le revêtement sur le substrat (7) ;
la formation de la zone de couplage de la lumière (21) et/ou de la zone d'extraction de la lumière (22) présente une formation de structure diffractive.

19. Procédé selon la revendication 18, **caractérisé en ce que** la première étape présente l'application d'une couche de nitrure de silicium (11) à partir de laquelle est formée la fibre optique (23).

20. Procédé selon au moins l'une quelconque des revendications 18 ou 19, **caractérisé en ce que** la première étape présente la production d'au moins une couche intermédiaire transparente (19) entre le substrat (7) et la fibre optique (23), dans lequel le matériau de la couche intermédiaire transparente (19) par rapport au matériau de la fibre optique (23) est faiblement réfractif.

21. Procédé selon au moins l'une quelconque des revendications 18 à 20, **caractérisé en ce que** la première étape présente la production d'au moins une couche intermédiaire transparente (20) entre la fibre optique (23) et la pointe de la sonde (2), dans lequel le matériau de l'autre couche intermédiaire transparente (20) par rapport au matériau de la fibre optique (23) est faiblement réfractif.

22. Procédé selon au moins l'une quelconque des revendications 20 ou 21, **caractérisé en ce que** la production de la couche intermédiaire (19, 20) comprend l'application d'au moins une couche d'oxyde de silicium, d'oxynitrure de silicium ou de fluorure de magnésium.

23. Procédé selon au moins l'une quelconque des revendications 18 à 22, **caractérisé en ce que** la formation de la structure diffractive présente une gravure et/ou un estampage d'une grille de couplage (24).

24. Procédé selon au moins l'une quelconque des revendications 18 à 23, **caractérisé en ce que** dans la deuxième étape, la couche transparente (13) est appliquée en une épaisseur de couche d'environ 1 à 30 µm, de préférence, d'environ 2 à 20 µm ou de façon optimale, une épaisseur de couche d'environ 3 à 8 µm.

25. Procédé selon au moins l'une quelconque des revendications 18 à 24, **caractérisé par** une gravure du substrat (7) en formant un support en porte-à-faux (3) qui est lié au substrat (7).

26. Procédé selon la revendication 25, **caractérisé en ce que** la gravure du substrat (7) présente une gravure chimique humide et une gravure à sec.

27. Procédé selon au moins l'une quelconque des revendications 18 à 26, **caractérisé en ce que** la gravure de la couche transparente (13) est, dans une quatrième étape, une gravure isotrope ou une combinaison de gravures isotrope et anisotrope.

28. Procédé selon au moins l'une quelconque des revendications 18 à 27, **caractérisé par** l'application d'une couche transparente à la lumière (15) sur au moins une surface périphérique (5) de la pointe de la sonde (2) et/ou une zone périphérique (6) de la pointe de la sonde (2).

29. Procédé selon la revendication 28, **caractérisé en ce que** la couche transparente à la lumière (15) est vaporisée de façon oblique sur la pointe de la sonde (2).

30. Procédé selon au moins l'une quelconque des revendications 28 ou 29, **caractérisé par** la mise en place d'une ouverture dans la couche transparente à la lumière (15) dans une zone de pointe (8) de la pointe de la sonde (2) en formant un diaphragme.

31. Procédé selon la revendication 30, **caractérisé en ce que** la mise en place d'une ouverture s'effectue avec un procédé d'érosion par étincelage et/ou de gravure plasma.
